# EUROPÄISCHE PATENTSCHRIFT

(11) **EP 0 685 288 B1**
(45) Veröffentlichungstag und Bekanntmachung des Hinweises auf die Patenterteilung: **26.08.1998**
(21) Anmeldenummer: 95106874.1
(22) Anmeldetag: 06.05.1995
(51) Int. Cl.: B23K 11/06

(54) **Verfahren zum Rollnahtschweissen einer sich überlappenden Blechnaht**
Method for welding overlapping sheets using rotating electrodes
Soudage de tôles se recouvrant en utilisant des électrodes circulaires

(30) Priorität: 03.06.1994 CH 1750/94
(43) Veröffentlichungstag der Anmeldung: 06.12.1995
(73) Patentinhaber: ELPATRONIC AG, CH-6303 Zug (CH)
(72) Erfinder: Taiana, Peter, CH-5053 Staffelbach (CH)

(56) Entgegenhaltungen:
- CH-A- 660 989
- US-A- 3 305 662
- US-E- R E32 251
- DATABASE WPI Derwent Publications Ltd., London, GB; AN 94-309471 38 & SU-A-1 815 069 (GULYAEV I V) , 15.Mai 1993

## Beschreibung

Die Erfindung betrifft ein Verfahren zum Rollnahtschweissen einer sich überlappenden Blechnaht gemäss Oberbegriff des Anspruchs 1. Ferner betrifft die Erfindung eine Rollnaht-Widerstandsschweissmaschine zur Schweissung sich überlappender Nähte von Behälter-Zargen aus Blech.

Es ist bekannt, dass beim Rollnahtschweissen einer Blechnaht der erste Schweisspunkt häufig nicht vollständig verschweisst ist. Insbesondere bei der Herstellung von Dosenzargen ist dies nachteilig, da die entsprechende Zarge aus der Produktion ausgeschieden werden muss. Das Problem der anfänglich unverschweissten oder schlecht verschweissten Schweissnaht hat mehrere Ursachen: Einerseits profitiert der Zargenanfang nicht von einem Wärmevorlauf bereits verschweisster Nahtabschnitte, andererseits ergibt sich durch das Einschieben der Zarge zwischen die beiden Rollenelektroden, bei welchen diese Elektroden auseinandergedrückt werden, aufgrund der Massenträgheit der Elektroden eine sich zu der eingestellten Soll-Schweisskraft addierende Kraft auf die Blechnaht. Ferner ergibt sich an der Zargenkante ein zu hoher Schweissdruck, da mit konstanter Schweisskraft weniger Fläche beaufschlagt wird als entlang der Naht. Durch die am Anfang erhöhte Schweisskraft bzw. den erhöhten Schweissdruck wird der elektrische Widerstand im Blech zwischen den Rollenelektroden deutlich verringert. Da der Schweissstrom konstant ist, ändert sich demgemäss die am Zargenanfang in die Schweissnaht eingebrachte Leistung proportional zu der genannten Widerstandsverringerung. Die bisher dagegen angewandte Massnahme ist die Erhöhung des Schweissstromes am Beginn der Schweissung. Die ins Blech eingebrachte Leistung P ist gleich dem Quadrat des Schweissstromes x den Blechwiderstand. Durch entsprechende Erhöhung des Stromes kann somit der verringerte Blechwiderstand am Anfang der Schweissung ausgeglichen werden. Es ist nun aber so, dass die Anzahl verschweisster Zargen pro Minute ständig erhöht wird. Die Zargen werden also immer schneller in die Schweissebene eingeschoben und es entstehen immer grössere Kraftspitzen, welche mit der Stromerhöhung häufig nicht mehr befriedigend kompensiert werden können. Ein weiteres Problem sind die mechanischen Schwingungen der Schweisselektroden, welche durch die Kraftspitzen am Zargenanfang ausgelöst werden. Durch eine Massenreduktion der einen Elektrode hat man bisher versucht diese Schwingungen möglichst gering zu halten. Aus US-A-3 305 662 ist es bekannt, den Schweissdruck in Abhängigkeit vom Primärstrom im Schweisstransformator entlang der Schweissnaht zu regulieren.

Aus dem Dokument CH-A-660 989 ist es bekannt, während der gesamten Schweissdauer periodisch den Schweissdruck jeweils anzuheben und abzusenken, um dadurch die Wirkung der Modulation des Schweissstromes nachzubilden. Das Problem der ungenügenden Leistungseinbringung beim Anfang der Schweissung wird in diesem Dokument nicht behandelt.

Aufgabe der Erfindung ist es, ein Verfahren zum Rollnahtschweissen zu schaffen, bei dem die genannten Probleme zu Beginn der Schweissung nicht oder in wesentlich reduziertem Masse auftreten, so dass die Schweissnaht bereits von Anfang an die geforderten Eigenschaften aufweist.

Die Lösung dieser Aufgabe wird bei einem Verfahren zum Rollnahtschweissen der eingangs genannten Art durch die kennzeichnenden Merkmale des Anspruchs 1 erzielt.

Durch die Schweisskraftverminderung am Anfang der Schweissung wird sowohl die elektrische Widerstandsänderung im Blech auf ein unschädliches Mass verringert als auch die mechanische Schwingung reduziert.

Bei einer besonders bevorzugten Ausführungsart der Erfindung wird ferner die Schweisskraft am Nahtende kurzzeitig erhöht.

Ferner liegt der Erfindung die Aufgabe zugrunde, eine Rollnaht-Widerstandsschweissmaschine zur Durchführung des Verfahrens zu schaffen. Dies wird mit den Merkmalen des Anspruchs 6 gelöst.

Im Gegensatz zum CH-A-660989 wird bei der vorliegenden Erfindung der Schweissdruck möglichst konstant gehalten, was beim Schweissbeginn durch eine kurzzeitige Reduktion der Schweisskraft erzielt wird.

Nachfolgend wird die Erfindung anhand der Figuren näher erläutert. Dabei zeigt
Figur 1 eine Darstellung der Idealkennlinie der Schweisskraft in Funktion der Zeit,
Figur 2 eine Darstellung der Schweisskraft in Funktion der Zeit, wie sie mit einer Vorrichtung gemäss der Erfindung erzielt worden ist;
Figur 3 eine schematische Darstellung der Schweisskrafteinstellung an einer Rollennahtschweissmaschine;
Figur 4 eine Teilansicht der Schweisskrafteinstellung von Figur 3;
Figur 5 eine weitere schematische Darstellung einer Schweisskrafteinstellung;
Figur 6 eine Teilansicht der Schweisskrafteinstellung von Figur 5; und
Figur 7 eine Prinzipdarstellung der Schweisskraftverminderung mit der Anordnung nach Figur 5.

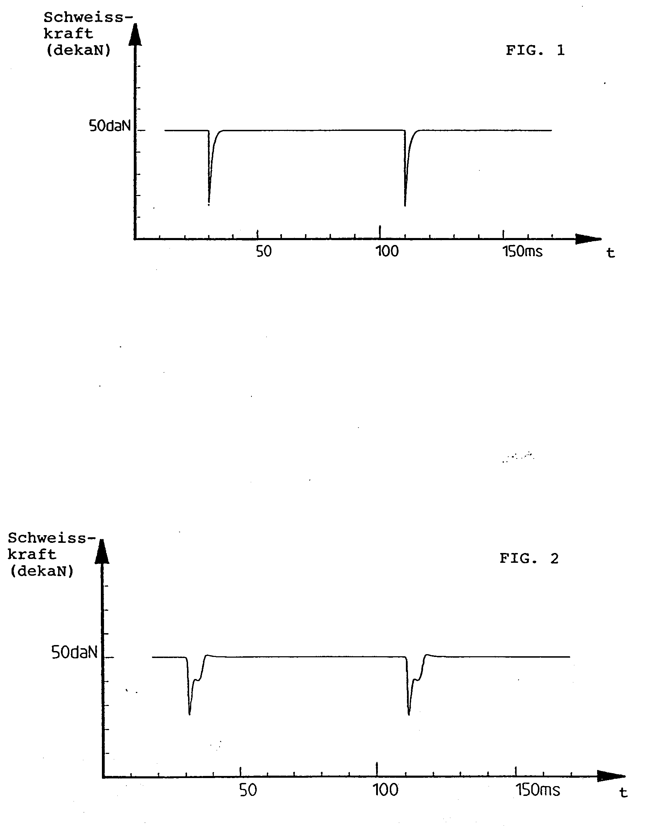

In Figur 1 ist die Schweisskraft an den Schweissrollen einer Rollennahtschweissmaschine in Funktion der Zeit dargestellt. Die Darstellung geht davon aus, dass Zargen für Dosen mit einer Rate von 750 Zargen pro Minute geschweisst werden. Es stehen dabei also 80 ms/Zarge zur Verfügung. Zu Beginn jeder Schweissung, also wenn die jeweilige Zarge zwischen die Schweissrollen eingeführt wird, wird die Schweisskraft idealerweise schlagartig reduziert, wie dies mit dem senkrecht abfallenden Verlauf der Schweisskraftkurve jeweils alle 80 ms dargestellt ist. Vorzugsweise wird die Schweisskraft auf weniger als die Hälfte der Soll-Schweisskraft reduziert. Die Schweisskraft wird dabei z.B. von den angegebenen 50 daN auf 15 daN reduziert. Diese Reduktion der Schweisskraft ergibt bei der eingeschobenen Zarge am Zargenanfang einen Schweissdruck, der ungefähr dem gewollten Schweissdruck entspricht und damit auch demjenigen Schweissdruck, welcher bei der Schweisskraft von 50 daN für den Rest der Schweissnaht wirksam ist. In dem dargestellten Beispiel ist die Reduktion der Schweisskraft während ca. 4 % der Zargenhöhe bzw. während der ersten 4 % der Schweisszeit wirksam. Nach dem maximalen Abfall der Schweisskraft steigt diese idealerweise nicht schlagartig sondern kontinuierlich wieder an, wie dies in der Figur 1 dargestellt ist. Die Reduktion der Schweisskraft kann natürlich auch während eines etwas längeren oder kürzeren Zeitbereichs als dargestellt erfolgen. Dies hängt jeweils von der Art und Dicke der zu verschweissenden Bleche und - in bezug auf die zu vermeidenden Schwingungen der Elektroden - von der Masse der Elektroden ab. Die Grösse des Aufalls der Schweisskraft kann natürlich auch in weitem Bereich gewählt werden. Bevorzugterweise liegt die Dauer der Reduktion der Schweisskraft im Bereich von 2 % bis 15 % der Schweisszeit einer Dosenzarge.

Vorzugsweise wird der Schweisskraftabfall zu Beginn der Schweissung so gross gewählt, dass eine Stromerhöhung gar nicht mehr benötigt wird, d.h. es findet durch den Abfall der Schweisskraft praktisch keine Widerstandsverringerung an der Zargenkante bzw. beim Einschieben der Zarge statt; dies ist insbesondere bei der bevorzugten Reduktion auf weniger als die Hälfte der Soll-Schweisskraft der Fall.

Die Realisierung des kurzzeitigen Abfalls der Schweisskraft kann natürlich auf vielfältige Weise erfolgen. Vorzugsweise wird die Kraftabsenkung durch einen Hammer erzielt, welcher durch den Maschinentakt gesteuert jeweils kurzzeitig so auf die Halterung der Schweisselektrode einwirkt, dass bei dieser die Schweisskraft durch den Hammerschlag reduziert wird. Vorzugsweise wird der Hammer durch eine Magnetspule bewegt. Figur 2 zeigt die Schweisskraft in Funktion der Zeit bei einer derart ausgeführten Vorrichtung mit einem elektromagnetisch bewegten Hammer. Die Anzahl Zargen pro Minute ist dabei gleich wie bei der Idealkennlinie von Figur 1. Es ergibt sich ebenfalls ein alle 80 ms erfolgender schneller Abfall der Schweisskraft. In diesem Fall wird die Schweisskraft etwa auf die Hälfte reduziert. Nach dem schnellen Abfall der Schweisskraft erfolgt ein etwas langsamerer Anstieg wieder auf die Soll-Schweisskraft, welche den gewünschten Schweissdruck entlang dem restlichen Teil der Naht ergibt.

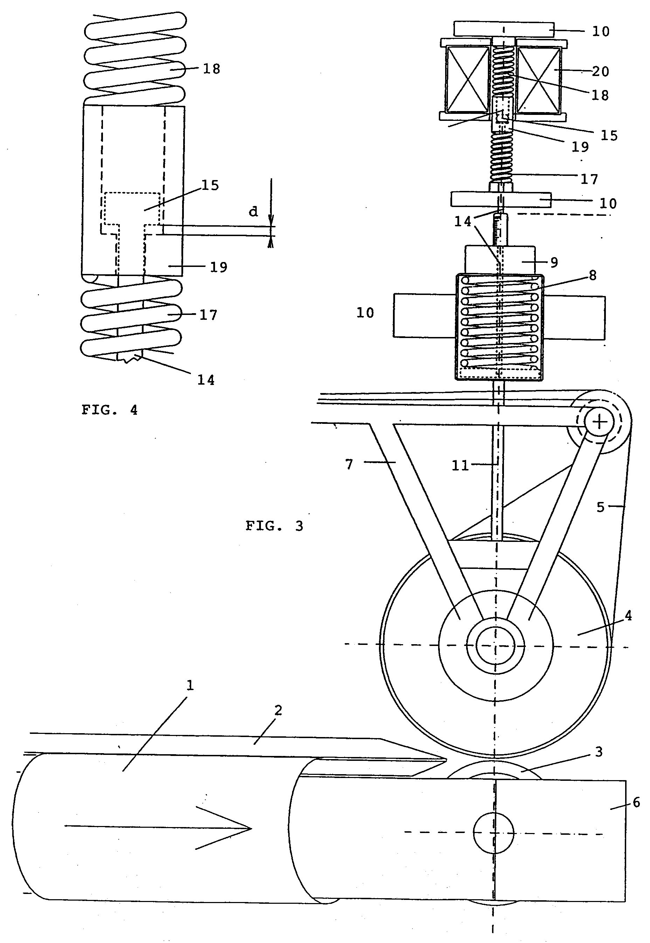

Figur 3 zeigt in schematisierter Form die Schweisskrafteinstellung an einer Rollennahtschweissmaschine für Dosenzargen. Dabei wird jeweils eine Dosenzarge 1 entlang einer Führung 2 zu den Schweissrollen vorgeschoben. Es ist eine untere Schweissrolle 3 an einem Arm 6 vorgesehen und eine obere Schweissrolle 4 an einem Arm bzw. einer beweglichen Schwinge 7. Die Schweissung erfolgt mittels einer Drahtelektrode 5. Eine solche Einrichtung ist bekannt. Die Schweisskraft wird ebenfalls bekannterweise mittels einer am Maschinengestell 10 befestigten Schweisskraftfeder 8 eingestellt. Diese Schweisskraftfeder 8 wirkt über die Stange 11 auf die Schwinge 7 und somit auf die obere Schweissrolle 4. Durch Veränderung der Vorspannung der Schweisskraftfeder 8 mittels einer Einstellung 9, kann die Schweisskraft auf einen vorbestimmten Wert eingestellt werden. Die gezeigte Einrichtung weist nun weiter eine Anordnung zur zeitweisen Reduktion der Schweisskraft auf. Diese wirkt über einen Verbindungsbolzen 14 auf die Stange 11 und somit auf die Schwinge 7 und die Schweissrolle 5. Der Verbindungsbolzen 14 erstreckt sich durch einen Teil des Maschinengestells 10 weiter nach oben und ist an seinem der Schweisskraftfeder 8 abgewandten Ende zu einem Verbindungsbolzenkopf 15 erweitert. Dies ist in Figur 4 genauer ersichtlich, wo das obere Ende des Verbindungsbolzens 14 grösser dargestellt ist. An seinem oberen Ende 14 ist der Verbindungsbolzen von einem Hammer 19 umgeben, welcher zwischen zwei Druckfedern 17 und 18 am Maschinengestell 10 gehalten ist. Ein Teil des Hammers 19 und die obere Druckfeder 18 sind von einer Magnetspule 20 umgeben. Zur Schweisskraftverminderung am Anfang der Zarge wird nun die Magnetspule 20 im Maschinentakt aktiviert bzw. desaktiviert. Wird bei der Aktivierung ein Strom durch die Magnetspule 20 geschickt, so verkürzt sich im entstehenden Magnetfeld die Druckfeder 18 und der Hammer 19 wird nach oben in das Innere der Magnetspule 20 bewegt. Zusätzlich wird auch der Hammer, da er magnetisierbar ist, in das Spuleninnere gezogen. Durch diese Eigenschaft entsteht der zweite Teil der in Figur 2 gezeigten Kurve. Der Hammer beschleunigt dabei entlang der Strecke d (Figur 4) und trifft danach auf den Verbindungsbolzenkopf 15 und übt auf den Verbindungsbolzen 14 eine in der Zeichnung nach oben gerichtete und gegen die Kraft der Schweisskraftfeder gerichtete Kraft auf die Schweissrolle 4 aus. Die am Zargenanfang wirksame Kraft wird also durch den Schlag des Hammers 19 auf den Verbindungsbolzenkopf 15 verringert. Bei der nachfolgenden Deaktivierung der Magnetspule 18 baut sich das Magnetfeld relativ langsam wieder ab, wodurch sich die im Magnetfeld befindliche Feder wieder entspannt und die normale, nur durch die Schweisskraftfeder 8 bestimmte Schweisskraft wieder erreicht wird. Auf die Amplitude der Kraftspitze kann bei dieser Einrichtung mit der Masse des Hammers und mit der Feldstärke der Spule Einfluss genommen werden. Wie bereits erwähnt, erfolgt die Aktivierung bzw. Deaktivierung der Magnetspule 20 synchron zum Maschinentakt, wobei ein einstellbares Zeitglied zwischen dem Maschinentakt und der Speiseschaltung für die Magnetspule 20 vorgesehen ist. Um eine Dauermagnetisierung zu verhindern, wird die Polarität bei jedem Puls invertiert.

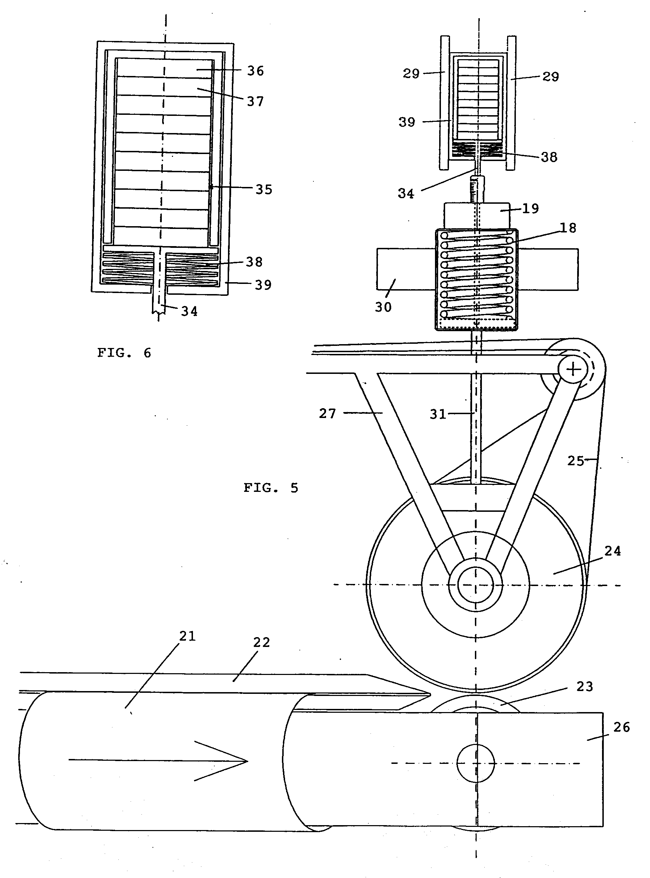

Figur 5 zeigt eine weitere Ausgestaltung der Schweisskrafteinstellung, wobei hier eine Zarge 21 entlang einer Führung 22 zu den Schweissrollen 24 und 23 gelangt, welche an den Armen 26 bzw. 27 angeordnet sind. Die Schweissung erfolgt mittels des Drahtes 25 als Zwischenelektrode. Die Schweisskrafteinstellung erfolgt hier normalerweise, wie bereits beschrieben, mittels der Schweisskraftfeder 18, welche über die Stange 31 auf die obere Schweissrolle 24 wirkt. Die Kraftausübung am Zargenanfang zur Reduzierung der Schweisskraft wird hier durch eine Kaskade 35 aus einzelnen Piezoelementen erzielt, welche in Figur 6 vergrössert dargestellt ist. Diese Kaskade ist in einem Gehäuse 39 angeordnet, welches vertikal freibeweglich in einer Führung 29 gelagert wird. Ueber einen Verbindungsbolzen 34 wirkt diese Kaskade über die Stange 31 direkt auf die obere Schweissrolle 24. Die einzelnen Piezoelemente, von denen im gezeigten Beispiel zehn Stück vorhanden sind, wobei zwei mit 36 bzw. 37 bezeichnet sind, werden von Tellerfedern unter einer Vorspannung gehalten, um keine zerstörenden Zugspannungen entstehen zu lassen. Beim Anlegen einer Spannung an die Kaskade von Piezokristallelementen verringert jedes Element seine Dicke um einen bestimmten Betrag bzw. die ganze Kaskade verringert ihre Länge um das Zehnfache dieses Betrages.

Auf dem Verbindungsbolzen 34 sitzt das Piezopaket in seiner Schutzhülse. Darum herum befindet sich das Gehäuse 39 und übernimmt einerseits die Uebertragung der Federkraft der Tellerfedern und andererseits dient die Masse des Gehäuses als Gewicht, welches durch die Ausdehnung der Piezokaskade verschoben wird (Ausnutzung der Massenträgheit). Durch diese Verschiebung des Gehäuses entsteht eine Kraft. Da sie durch die Kaskade ausgelöst wird, welche auf dem Verbindungsbolzen sitzt, entsteht dort eine entgegengesetzte Kraft.

Das Gehäuse 39 wird also durch die Piezokaskadenausdehnung nach oben verschoben. Dabei stösst sich die Kaskade auf dem Verbindungsbolzenteller 34 ab, welcher eine positive Kraft über die Stange 31 auf die Schweissrolle 24 überträgt (Schweisskrafterhöhung).

Dieser Vorgang passiert vor dem Einschieben der ersten Zarge. Wenn der Zargenanfang zwischen die Schweissrollen geschoben wird, wird die noch anliegende Spannung zurückgesetzt (Entladung der Kaskade).

Dabei geschieht das Umgekehrt des oben Beschriebenen, d.h. die Piezoelemente ziehen sich zusammen, die Vorspannung der Tellerfedern ziehen das Gehäuse in die entgegengesetzte Richtung zurück. Dabei wirkt eine negative Kraft auf den Verbindungsbolzen, die Schweisskraft wird abgesenkt.

Durch Verändern der Amplitude und der Rampenform der Spannung kann die Kraftkurve beeinflusst werden.

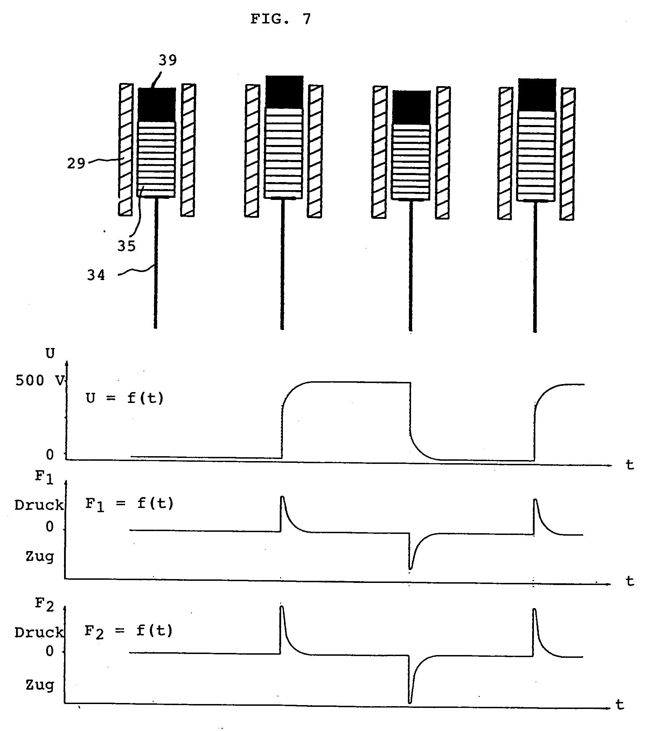

Figur 7 zeigt schematisch die Wirkungsweise der Piezokaskade 35, wobei das Gehäuse 39 nur als Gewicht dargestellt ist. In den Kurvendarstellungen ist die an der Kaskade angelegte elektrische Spannung und die Kraft F₁ und F₂ dargestellt. F₁ ist die Kraft, mit welcher das Gewicht (Gehäuse) verschoben wird. F₂ ist die Kraft, mit welcher die Piezokaskade inklusiv Gewicht verschoben wird. F₁ ist immer kleiner als F₂. F₂ ist die Kraft, welche auf die Schweissrolle wirkt.

Zusätzlich und unabhängig davon wirkt nach wie vor die Kraft der Schweisskraftfeder auf die Schweissrolle.

Beide als Beispiel beschriebene Ausführungen haben die Eigenschaft, dass sie nicht anfällig auf Toleranzänderungen sind (beispielsweise Aenderungen der Blechdicke, der Schweissrollenexzentrizität oder Wärmeausdehnung von Maschinenteilen, etc).

Beim elektromagnetischen Prinzip können solche Toleranzänderungen in der Distanz "d" aufgefangen werden.

Beim Piezoprinzip ist die gesamte Piezokaskade frei auf dem Verbindungsbolzen 34 angeordnet, so dass sich bei Toleranzänderungen die Kaskade frei in einer Vertikallagerung auf oder ab bewegen kann.

Nach einem weiteren Aspekt der Erfindung kann am Ende einer Zarge oder einer Reihe von Zargen die Schweisskraft erhöht werden. Die Krafterhöhung am Ende einer Zarge oder einer Reihe von Zargen kann funktionell einer Schweissstromreduktion gleichgesetzt werden und vermeidet eine Nahtüberhitzung am Zargenende. Die Krafterhöhung kann durch entsprechende Modifikation der Vorrichtung zur Kraftverminderung ebenfalls durch diese ausführbar sein oder es kann dazu eine weitere Vorrichtung an einer der Schweissrollen bzw. am Arm oder der Schwinge angreifen.

Ferner kann durch rasche Reduktion oder Erhöhung der Schweisskraft eine aktive Schwingungsbekämpfung durch die Verhinderung einer Schwingungsanregung bewirkt werden.

Natürlich können auch weitere, nicht geschilderte Anordnungen zur kurzzeitigen Erhöhung und/oder Verminderung der Schweisskraft verwendet werden, z.B. pneumatische oder hydraulische Anordnungen.

## Patentansprüche

1. Verfahren zum Rollnahtschweissen einer sich überlappenden Blechnaht mit einem vorbestimmten Soll-Schweissdruck,der durch eine Soll-Schweisskraft erzeugt wird, wobei eine Folge von Behälter-Zargen (1) auf einer Rollennahtschweissmaschine verschweisst wird, dadurch gekennzeichnet, dass mindestens bei der ersten Zarge der Folge bei deren Einführung zwischen die Schweissrollen (3,4; 23,24) beim Schweissbeginn die Schweisskraft gegenüber der Soll-Schweisskraft um einen vorgewählten Betrag reduziert wird, und dass nachfolgend ein Anstieg der Schweisskraft auf die Soll-Schweisskraft für den Rest der Schweissnaht der Zarge erfolgt.

2. Verfahren nach Anspruch 1, dadurch gekennzeichnet, dass die Schweisskraft ausgehend von der Soll-Schweisskraft beim Schweissbeginn einen raschen Abfall erfährt und danach einen gegenüber dem Abfall langsameren Anstieg erfährt.

3. Verfahren nach einem der Ansprüche 1 oder 2, dadurch gekennzeichnet, dass die Schweisskraft auf weniger als die Hälfte der Soll-Schweisskraft reduziert wird.

4. Verfahren nach einem der Ansprüche 1 bis 3, dadurch gekennzeichnet, dass Dosenzargen geschweisst werden, und dass die Schweisskraftreduktion während jeweils 2 bis 15 % der Schweisszeitdauer jeder Dosenzarge erfolgt.

5. Verfahren nach einem der Ansprüche 1 bis 4, dadurch gekennzeichnet, dass am Nahtende die Schweisskraft erhöht wird, wobei am Ende jeder Zarge die Schweisskraft erhöht wird, oder am Ende der letzten Zarge der Folge die Schweisskraft erhöht wird.

6. Rollnaht-Widerstandsschweissmaschine zur Schweissung sich überlappender Nähte von Behälter-Zargen (1) aus Blech, die eine Einrichtung (14, 15, 17,18, 19, 20; 29, 34, 35, 38, 39) umfasst, mittels welcher bei der Einführung mindestens der ersten Zarge (1) einer Folge von Zargen zwischen die Schweissrollen (3, 4; 23, 24) beim Schweissbeginn die Schweisskraft gegenüber der Soll-Schweisskraft um einen vorgewählten Betrag reduzierbar ist, und nachfolgend ein Anstieg auf die Soll-Schweisskraft für den Rest der Schweissnaht der Zarge bewirkbar ist.

7. Rollnaht-Widerstandsschweissmaschine nach Anspruch 6, dadurch gekennzeichnet, dass die Reduktionseinrichtung ein wiederholt auslösbares, durch den Maschinentakt gesteuertes Schlagelement umfasst, dessen Schlag jeweils eine der Schweisskraft entgegenwirkende Kraft bei mindestens einer Schweissrolle bewirkt.

8. Rollnaht-Widerstandsschweissmaschine nach Anspruch 6 oder 7 zur Durchführung des Verfahrens nach Anspruch 5 , gekennzeichnet durch eine Einrichtung zur kurzzeitigen Erhöhung der Schweisskraft, insbesondere durch ein Schlagelement, dessen Schlag jeweils eine der Schweisskraft gleichwirkende Kraft bei mindestens einer Schweissrolle bewirkt.

## Claims

1. Process for roller seam welding an overlapping sheet-metal seam with a predetermined set welding pressure which is generated by a set welding force, in which a series of container bodies (1) are welded on a roller seam welding machine, characterized in that the welding force is reduced by a preselected amount with respect to the set welding force at least for the first body in the series upon its insertion between the welding rollers (3, 4; 23, 24) at the commencement of welding, and in that the welding force is then raised to the set welding force for the remainder of the weld seam of the body.

2. Process according to Claim 1, characterized in that from the set welding force at the commencement of welding the welding force undergoes a rapid fall, followed by a rise that is more gradual than the fall.

3. Process according to Claim 1 or Claim 2, characterized in that the welding force is reduced to less than half the set welding force.

4. Process according to any one of Claims 1 to 3, characterized in that can bodies are welded, and the reduction in welding force takes place during 2 to 15 % of the weld time for each can body.

5. Process according to any one of Claims 1 to 4, characterized in that the welding force is increased at the end of the seam, either at the end of each body, or at the end of the last body in the series.

6. Resistance seam welding machine for welding overlapping seams of container bodies (1) of sheet metal, which includes a device (14, 15, 17, 18, 19, 20; 29, 34, 35, 38, 39) by means of which the welding force can be reduced by a preselected amount with respect to the said welding force upon the insertion of at least the first body (1) of a series of bodies between the welding rollers (3, 4; 23, 24) at the commencement of welding, and thereafter increased to the set welding force for the remainder of the weld seam of the body.

7. Resistance seam welding machine according to Claim 6, characterized in that the reducing device has a repeatedly operable percussive element which is controlled by the machine cycle and each blow of which exerts a force counteracting the welding force at at least one welding roller.

8. Resistance seam welding machine according to Claim 6 or Claim 7 for carrying out the process according to Claim 5, characterized by a device for momentarily increasing the welding force, in particular by a percussive element each blow of which exerts a force acting in the same direction as the welding force at at least one welding roller.

## Revendications

1. Procédé pour la soudure à la molette de tôles se recouvrant avec une pression de soudure prédéterminée de consigne qui est générée par une force de soudure de consigne, dans lequel une série de corps de boîte (1) est soudée au moyen d'une machine de soudure à la molette, caractérisé en ce qu'au moins pour le premier corps de boîte de la série, lors de son introduction entre les molettes de soudure (3, 4; 23, 24), au début de la soudure, la force de soudure est réduite par rapport à la force de soudure de consigne d'une valeur choisie au préalable, et en ce qu'ensuite, une augmentation de la force de soudure jusqu'à la force de soudure de consigne est réalisée pour le reste du cordon de soudure du corps de boîte.

2. Procédé selon la revendication 1, caractérisé en ce que la force de soudure, en partant de la force de soudure de consigne au début de la soudure, est amenée à chuter rapidement, et en ce qu'ensuite, elle est augmentée plus lentement par rapport à la chute.

3. Procédé selon la revendication 1 ou 2, caractérisé en ce que la force de soudure est réduite à moins que la moitié de la force de soudure de consigne.

4. Procédé selon l'une quelconque des revendications 1 à 3, caractérisé en ce que des corps de boîte sont soudés, et en ce que la réduction de la force de soudure est réalisée respectivement pour une durée comprise entre 2 et 15% de la durée de soudure de chaque corps de boîte.

5. Procédé selon l'une quelconque des revendications 1 à 4, caractérisé en ce qu'à la fin du cordon, la force de soudure est augmentée, la force de soudure étant augmentée à la fin de chaque corps de boîte, ou à la fin du dernier corps de boîte de la série.

6. Machine de soudure par résistance à la molette pour souder des tôles se recouvrant de corps de boîte (1) en tôle, comprenant un dispositif (14, 15, 17, 18, 19, 20; 29, 34, 35, 38, 39) au moyen duquel, lors de l'introduction d'au moins un corps de boîte (1) d'une série de corps de boîte entre les molettes de soudure (3, 4; 23, 24), au début de la soudure, la force de soudure peut être réduite par rapport à la force de soudure de consigne d'une valeur choisie au préalable, et ensuite, une augmentation jusqu'à la force de soudure de consigne peut être réalisée pour le reste du cordon de soudure du corps de boîte.

7. Machine de soudure par résistance à molette selon la revendication 6, caractérisée en ce que le dispositif de réduction comprend un élément de percussion pouvant être déclenché de façon répétée et commandé par la cadence de la machine, l'élément dont la percussion réalise une force respectivement dirigée à l'opposée de la force de soudure pour au moins une molette de soudure.

8. Machine de soudure par résistance à molette selon la revendication 6 ou 7 pour la mise en oeuvre du procédé selon la revendication 5, caractérisée par un dispositif pour une élévation brève de la force de soudure, notamment par un élément de percussion dont la percussion réalise une force agissant dans la même direction que la force de soudure pour au moins une molette de soudure.
